# EUROPÄISCHE PATENTANMELDUNG

(11) **EP 1 307 032 A1**
(43) Veröffentlichungstag der Anmeldung: **02.05.2003**
(21) Anmeldenummer: 02021160.3
(22) Anmeldetag: 24.09.2002
(51) Int. Cl.: H04M 1/05, H04M 1/82

(54) **Kopfhörer für die Telekommunikation**

(30) Priorität: 26.10.2001 DE 10152450
(71) Anmelder: Sennheiser electronic GmbH & Co. KG, 30900 Wedemark (DE)
(72) Erfinder: Quarré, Maurice, 21442 Toppenstedt (DE)
(74) Vertreter: Eisenführ, Speiser & Partner

(57) **Zusammenfassung**

Dieses Sprechzeug besteht regelmäßig aus einer sogenannten Hör-Sprech-Garnitur mit wenigstens einer Kopfhörermuschel für ein Ohr und einem Bügel, der über den Nacken oder Kopf des Telefonierers gelegt wird. Ferner ist das Sprechzeug mit einem Mikrofonarm ausgestattet, wobei der Arm aus einem Bügel besteht, an dessen vordersten Ende - also in unmittelbarer Entfernung zum Mund des Telefonierers - ein Mikrofon angeordnet ist.

Es ist Aufgabe der Erfindung, die bisherigen Lösungen für professionelles Sprechzeug zu verbessern und vereinfachen.

Sprechzeug für die Telekommunikation, bestehend aus einem Mikrofonbügel mit einem freien Ende, an dem ein Mikrofon angeordnet ist und wobei die mit dem Mikrofon aufgenommenen Audiosignale zur Weiterverarbeitung an eine Telekommunikationseinrichtung geführt werden, dadurch gekennzeichnet, dass das Sprechzeug eine Beleuchtungseinrichtung aufweist, die beim Telefonieren mit dem Sprechzeug aktiviert wird.

## Beschreibung

Die Erfindung betrifft ein Sprechzeug für die Telekommunikation.

Dieses Sprechzeug besteht regelmäßig aus einer sogenannten Hör-Sprech-Garnitur mit wenigstens einer Kopfhörermuschel für ein Ohr und einem Bügel, der über den Nacken oder Kopf des Telefonierers gelegt wird. Ferner ist das Sprechzeug mit einem Mikrofonarm ausgestattet, wobei der Arm aus einem Bügel besteht, an dessen vordersten Ende - also in unmittelbarer Entfernung zum Mund des Telefonierers - ein Mikrofon angeordnet ist.

Dieses Sprechzeug ist mit einem Telefon verbunden, so dass beim aktiven Telefonieren der Telefonierer oder die Telefonistin nicht mehr eigens einen Telefonhörer halten muss, sondern beide Arme frei hat und neben dem Telefonieren, z.B. noch weitere Bürotätigkeiten erfüllen kann.

Das Sprechzeug der vorgenannten Art hat mittlerweile in vielen Bereichen Einzug gehalten, insbesondere in Call-Centern und auch in Empfängerräumen, also über überall dort, wo Personen hauptberuflich telefonieren müssen, sei es, um Informationen entgegenzunehmen oder wiederzugeben oder sonstige Servicedienstleistungen per Telefon anzubieten.

Das Problem, was sich bei dem Sprechzeug für Telekommunikation einstellt, besteht u. a. darin, dass ein Dritter, wenn er in die Nähe eines Telefonierers kommt, der das Sprechzeug trägt, diesen oftmals anspricht, auch wenn er nicht weiß, ob der Telefonierer derzeit aktiv telefoniert.

Dadurch, dass man es gewohnt ist, dass jemand beim aktiven Telefonieren auch den Hörer oder ein Mobiltelefon am Ohr hat, führt dies regelmäßig zu sehr unerwünschten Störungen der Telefonierer mit Sprechzeug.

Aus diesen Gründen ist auch in Call-Centern bereits dafür gesorgt worden, dass die jeweiligen Telefonierer/Telefoniererinnen in eigenen Kabinen sitzen, damit sie ungestört dort ihre Arbeit verrichten können. Diese Lösung ist jedoch in Empfangsbereichen unbrauchbar.

Es ist Aufgabe der Erfindung, die vorgenannten Nachteile zu vermeiden und auch die bisherigen Lösungen für professionelles Sprechzeug zu verbessern und zu vereinfachen.

Die Aufgabe wird mit einem Sprechzeug für Telekommunikation mit den Merkmalen nach Anspruch 1 oder 4 gelöst. Vorteilhafte Weiterbildungen sind in den Unteransprüchen beschrieben.

Gemäß der erfindungsgemäßen Lösung nach Anspruch 1 ist an dem Sprechzeug für Telekommunikation eine Beleuchtungseinrichtung angebracht, welche beim aktiven Telefonieren des Sprechzeuges aktiviert ist.

Die Beleuchtungseinrichtung ist bevorzugt eine LED, OLED, oder ein Leuchtfaden oder dergleichen und kann je nach Variante in den verschiedensten Farben Rot, Grün, Blau, Schwarz oder den Mischfarben hieraus zum Leuchten gebracht werden.

Das Leuchten kann hierbei auch so aussehen, dass ein Blinken erfolgt oder das beispielsweise die Farbe Grün aufleuchtet, wenn kein Telefongespräch geführt wird oder auch kein Anruf eingegangen ist, die Farbe Gelb aufleuchtet, wenn ein Anruf eingeht und die Farbe Rot aufleuchtet, wenn aktiv telefoniert wird.

Alternativ zu vorstehender Lösung mit Leuchtmitteln am u.U. teiltransparent gehaltenen Bügel des Sprechzeugs kann auch eine Anschlussbox zwischen Telefonapparat und dem Sprechzeug (Hör-Sprech-Garnitur) ausgebildet sein. Diese Anschlussbox kann einen klares oder einen milchiges Fenster aufweisen, unterhalb dessen Leuchtmittel angeordnet sind, die bei entsprechendem Aufleuchten das gesamte Fenster zum Aufleuchten bringen. Hierbei kann das Fenster selbst auch noch ein Werbelogo tragen.

Sobald die Leuchtmittel aktiviert sind und beispielsweise Rot aufscheinen, weiß eine in den Raum tretende Person sofort, dass telefonier wird und wird sich dementsprechend verhalten, so dass mit der Erfindung das gewünschte Ziel erreicht wird, dass nämlich telefonierende Personen nicht mehr aus Versehen von Dritten angesprochen werden.

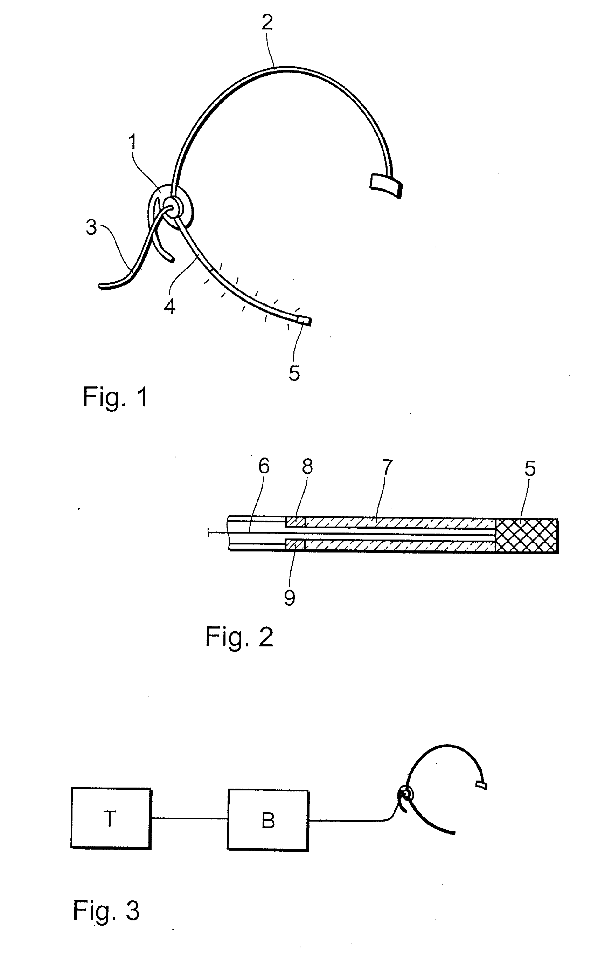

Figur 1 zeigt ein erfindungsgemäßes professionelles Sprechzeug für die Telekommunikation. Dieses Sprechzeug besteht aus einer Sprechgarnitur mit einem Ohrhörer 1, einem daran angebrachten Bügel 2, der sich über den Nacken oder den Kopf des Benutzers legen lässt, um die Hör-Sprech-Garnitur am Kopf des Benutzers zu fixieren. Über ein Kabel 3 ist das Sprechzeug mit einem Telefonapparat (nicht dargestellt) verbunden. Ferner weist das erfindungsgemäße Sprechzeug einen Mikrofonbügel 4 auf, an dessen vordersten Ende sich ein Mikrofon 5 befindet, in das der Telefonierer hineinspricht, wenn er telefoniert.

Am Mikrofonbügel sind ferner Leuchtmittel angebracht, die leuchten, wenn ein Telefonanruf eingeht und/oder aktiv telefoniert wird, so dass ein Dritter dann sofort weiß, ob der Telefonierer gestört werden kann.

Figur 2 zeigt noch eine genauere Ausführung des Mikrofonbügels nach Figur 1. Hierbei ist am vorderen Ende wiederum das Mikrofon 5 zu erkennen, welches über ein Kabel 6, welches durch den Bügel verläuft, mit dem Telefonapparat verbunden ist. Das Kabel 6 befindet sich in der dargestellten Ausführungsform innerhalb eines Rohres, welches seinerseits wiederum von einem transparenten Rohr 7 umgeben ist. In diesem transparenten Rohr 7 sind seitlich verschiedene Leuchtmittel 8 und 9 angebracht, die bei Aktivierung das gesamte transparente Rohr zum Aufleuchten bringen, wobei die Gestaltung der Transparenz des Rohres so ausfallen sollte, dass das Licht möglichst innerhalb des transparenten Rohres gefangen ist.

Die Leuchtmittel 8 und 9 können verschiedenfarbig sein und sind bevorzugt so ausgebildet, dass sie möglichst wenig elektrische Energie aufnehmen müssen, um aufzuleuchten. Die Leuchtmittel 8 und 9 sind über ein Kabel mit einer entsprechenden Steuereinrichtung verbunden, welche den Status des Telefonapparates erfasst und in Abhängigkeit dessen die Leuchtmittel ansteuert.

Selbstverständlich kann auch eine Programmiereinrichtung vorgesehen sein, mittels der ein Benutzer das entsprechende Verhalten der Leuchtmittel selbst programmieren kann, z.B. in der Gestalt, dass der vordere Mikrofonarm des Sprechzeugs nach Figur 2 grün aufleuchtet, wenn kein Telefonanruf eingegangen ist, ein gelbes Aufleuchten erfolgt, wenn ein Telefonanruf eingeht und ein rotes Aufleuchten erfolgt, wenn aktiv telefoniert wird.

Selbstverständlich lassen sich auch mittels Einstellen von blinkenden verschiedenen Leuchtmitteln entsprechende Warnhinweise an Dritte mittels der Beleuchtung erzeugen.

Figur 3 zeigt alternativ zum dargestellten Sprechzeug auch noch eine weitere Variante, bei der eine Box B zwischen dem Sprechzeug und dem Telefonapparat geschaltet ist. Diese Box B kann ebenfalls Leuchtmittel enthalten und steht beispielsweise auf dem Tresen oder Schreibtisch eines Telefonierers, ist also für jedermann sichtbar. Sobald ein Telefonanruf eingeht oder aktiv telefoniert wird, wird entsprechend ein Leuchtmittel der Box aktiviert, so dass ein Dritter, der den Raum betritt, gleich weiß, ob auch telefoniert wird.

Selbstverständlich können auch die verschiedensten Leuchtvarianten wie sie bereits anhand von Figur 2 beschrieben wurden, in Ergänzung zu dem Beschriebenen auch in der Box B verifiziert werden.

Mit der Erzeugung des optischen Signals zur Erkennung, dass eine Person telefoniert, kann mittels der Erfindung ganz hervorragend die erfindungsgemäße Aufgabe gelöst werden. Die optische Signalisierung des Telefonierens ist äußerst wirksam und darüber hinaus auch ästhetisch für das Sprechzeug sehr anspruchsvoll.

Mit der erfindungsgemäßen Beleuchtung des Mikrofons wird quasi auch ein weiteres Schmuckelement bereitgestellt, was die Attraktivität des Einsatzes des erfindungsgemäßen Sprechzeugs erhöht.

## Patentansprüche

1. Sprechzeug für die Telekommunikation, bestehend aus einem Mikrofonbügel mit einem freien Ende, an dem ein Mikrofon angeordnet ist und wobei die mit dem Mikrofon aufgenommenen Audiosignale zur Weiterverarbeitung an eine Telekommunikationseinrichtung geführt werden,
**dadurch gekennzeichnet, dass** das Sprechzeug eine Beleuchtungseinrichtung aufweist, die beim Telefonieren mit dem Sprechzeug aktiviert wird.

2. Sprechzeug nach Anspruch 1,
**dadurch gekennzeichnet, dass** die Beleuchtungseinrichtung aus einer LED besteht.

3. Sprechzeug nach Anspruch 1,
**dadurch gekennzeichnet, dass** die Beleuchtungseinrichtung im oder am Bügel ausgebildet ist.

4. Sprechzeug nach einem der vorhergehenden Ansprüche,
**dadurch gekennzeichnet, dass** mit der Beleuchtungseinrichtung ein Teil des Bügels, bevorzugt der vordere Teil des Bügels beleuchtet wird, wenn das Sprechzeug in aktiver Benutzung ist.

5. Sprechzeug für die Telekommunikation, bestehend aus einem Mikrofonbügel mit einem freien Ende, an dem ein Mikrofon angeordnet ist und wobei die mit dem Mikrofon aufgenommenen Audiosignale zur Weiterverarbeitung einer Telekommunikationseinrichtung geführt werden,
**dadurch gekennzeichnet, dass** zwischen dem Sprechzeug und dem Telefonapparat eine Anschlussbox ausgebildet ist, welche mit Leuchtmitteln ausgestattet ist, die beim aktiven Telefonieren eingeschaltet sind.

6. Sprechzeug nach einem der vorhergehenden Ansprüche,
**dadurch gekennzeichnet, dass** die Beleuchtungseinrichtung zum Leuchten aktiviert wird, wenn das Sprechzeug nach seinem Anschluss betriebsbereit ist.

7. Sprechzeug nach einem der vorhergehenden Ansprüche,
**dadurch gekennzeichnet, dass** die Beleuchtungseinrichtung ein Blinken erzeugt, wenn ein Telefonanruf eingeht, jedoch das Gespräch noch nicht angenommen worden ist.

8. Sprechzeug nach einem der vorhergehenden Ansprüche,
**dadurch gekennzeichnet, dass** die Beleuchtungseinrichtung ein Blinken beim aktiven Telefonieren mit dem Sprechzeug erzeugt.

9. Sprechzeug nach einem der vorhergehenden Ansprüche,
**dadurch gekennzeichnet, dass** die Beleuchtungseinrichtung nicht aufleuchtet, wenn noch kein Anruf eingegangen ist, dass die Beleuchtungseinrichtung so lange in vorbestimmten Zeitabständen blinkt, wenn ein Anruf eingeht und dass die Beleuchtungseinrichtung dauerhaft leuchtet, wenn aktiv telefoniert wird.

10. Sprechzeug nach einem der vorhergehenden Ansprüche,
**dadurch gekennzeichnet, dass** für die Beleuchtungseinrichtung eine Steuerungseinrichtung vorgesehen ist, welche an den Telefonapparat gekoppelt ist, bei dem das Sprechzeug eingesetzt wird und dass die Steuerungseinrichtung die Beleuchtungseinrichtung abhängig vom Status des Telefonapparates in gewünschter Weise steuert.

11. Sprechzeug nach einem der vorhergehenden Ansprüche, **dadurch gekennzeichnet, dass** das Sprechzeug wenigstens zwei verschiedenfarbige Beleuchtungsmittel aufweist und dass z.B. ein grünes Beleuchtungsmittel aufleuchtet, wenn noch kein Telefonanruf eingegangen ist, dass ein gelbes Beleuchtungsmittel aufleuchtet, wenn ein Telefonanruf eingeht und dass ein rotes Beleuchtungsmittel aufleuchtet, wenn aktiv mit dem Sprechzeug telefoniert wird.
